# EUROPEAN PATENT APPLICATION

(11) **EP 2 790 439 A1**
(43) Date of publication of application: **15.10.2014**
(21) Application number: 11878426.3
(22) Date of filing: 30.12.2011
(51) Int. Cl.: H04W 28/08

(54) **MOBILE LOAD BALANCING METHOD AND ACCESS NETWORK DEVICE**

(71) Applicant: Huawei Technologies Co., Ltd., Shenzhen, Guangdong 518129 (CN)
(72) Inventor: HU, Chunli, Shenzhen Guangdong 518129 (CN)
(74) Representative: Thun, Clemens
(86) International application number: PCT/CN2011/085005
(87) International publication number: WO 2013/097169

(57) **Abstract**

A mobility load balancing method and an access network device are disclosed, which are applied in the field of communication technologies. The mobility load balancing method includes: in the embodiment of the present invention, acquiring, by an access network device, resources actually occupied by a service of an operator in a cell controlled by a base station and preset resources occupied by the service of the operator, and determining, according to the acquired resources actually occupied by the service and the preset resources occupied by the service, whether to perform mobility load balancing (MLB) on a user equipment served by the operator, thereby implementing balancing of mobility load.

## Description

### TECHNICAL FIELD

The present invention relates to the field of communications technologies, and in particular, to a mobility load balancing method and an access network device.

### BACKGROUND

Network sharing among multiple operators can save the cost of network construction and shorten the cycle of network construction, mainly including the sharing of telecommunications network infrastructures (for example, station addresses, facilities in an equipment room, towers, power equipment, and other sites), and sharing of network devices (relevant facilities of telecommunications network equipment such as a base station, transmission and core networks). Radio access network sharing is an important network sharing technology. To be specific, the user equipments corresponding to multiple operators can share the same base station or cell.

Mobility load balancing (Mobility Load Balancing, MLB) technology is an important technology for solving the problem of unbalanced mobility load. In a radio network environment, due to the diversity of the services of the user device, the location of the user device is also random, which causes the unbalanced cell load. By means of the MLB technology, a part of the load of a cell with a higher load is transferred to a cell with a lower load by coordinating the load distribution between adjacent cells, thereby optimizing the resource utilization, and increasing the access success rate.

The MLB technology is usually applied in the scenario of network sharing. That is, the load of each cell is evaluated according to the situation of the resources occupied by the services of all the user equipments in each cell, and after load information is exchanged with adjacent cells and a load balancing target decision is made, load balancing is performed on the cell with a higher load. Specifically, the cell with a higher load selects, from all the user equipments in the cell, a part of user equipments for handover.

In the foregoing conventional cell load balancing process in the scenario of network sharing, the service development of each operator is unbalanced, and the case of unbalanced resources actually occupied by a service of each operator may occur.

### SUMMARY

An embodiment of the present invention provides a mobility load balancing method and an access network device, capable of balancing service-occupied resources of each operator.

In one aspect, a mobility load balancing method is provided according to the embodiment of the present invention, including:
acquiring resources actually occupied by a service of an operator and preset resources occupied by the service of the operator, where the operator is in a cell controlled by a base station; and
determining, according to the resources actually occupied by a service and the preset resources occupied by the service, whether to perform mobility load balancing MLB for a user equipment served by the operator.

In another aspect, an access network device is provided, including:
an acquiring unit, configured to acquire resources actually occupied by a service of an operator and preset resources occupied by the service of the operator, where the operator is in a cell controlled by a base station; and
a load balancing determining unit, configured to determine, according to the resources actually occupied by a service and the preset resources occupied by the service acquired by the acquiring unit, whether to perform mobility load balancing (MLB) on a user equipment served by the operator.

In the embodiment of the present invention, the access network device may acquire the resources actually occupied by a service of the operator and the preset resources occupied by the service of the operator in the cell controlled by the base station, and determine, according to the acquired resources actually occupied by a service and preset resources occupied by the service, whether to perform the MLB for the user equipment served by the operator. Because in this embodiment, the user equipments in one cell are categorized by the operators, and the MLB is performed in consideration of the resources actually occupied by a service of the operator and the preset resources occupied by the service of the operator. As compared with determining, only according to the resources occupied by all the user equipments, whether to perform the MLB in the cell in the prior art, the method according to the embodiment of the present invention can balance the resources actually occupied by a service among the user equipments served by each operator.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from the accompanying drawings without creative efforts.
FIG. 1 is a flow chart of a mobility load balancing method according to an embodiment of the present invention;
FIG. 2 is a flow chart of another mobility load balancing method according to the embodiment of the present invention;
FIG. 3 is a flow chart of another mobility load balancing method according to the embodiment of the present invention;
FIG. 4 is a structural diagram of an access network device according to an embodiment of the present invention; and
FIG. 5 is a structural diagram of a MLB system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

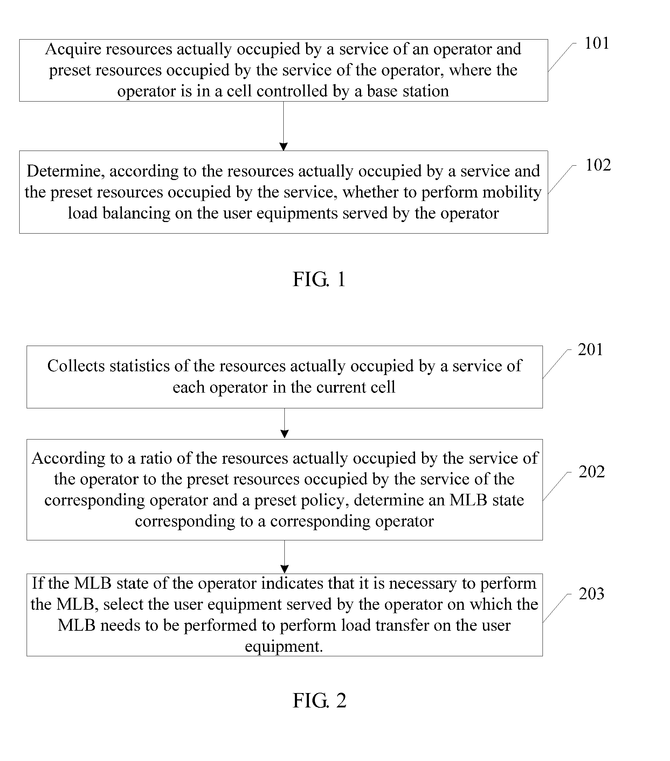

An embodiment of the present invention provides a mobility load balancing method, mainly applied in the scenario of multiple operators sharing a network, such as long term evolution (Long Term Evolution, LTE), global system for mobile communications (Global System of Mobile communication, GSM), universal mobile telecommunications system (Universal Mobile Telecommunications System, UMTS), or other networks. The method according to this embodiment is a method executed by an access network device such as a base station, and the flow chart thereof is as shown in FIG. 1. The method includes the following steps.

Step 101: Acquire resources actually occupied by a service of an operator and preset resources occupied by the service of the operator, where the operator is in a cell controlled by a base station.

As for an operator, the access network device may take a sum of radio air interface resources of all user equipments served by the operator in a cell as the resources actually occupied by the service of the operator; and the preset resources occupied by the service of the operator are information of service-occupied resources negotiated with other operators by the operator when the operator deploys the service, and may be a ratio.

Step 102: Determine, according to the resources actually occupied by the service and the preset resources occupied by the service acquired in step 101, whether to perform mobility load balancing for the user equipments served by the operator.

When determining whether to perform the MLB for the user equipments served by a certain operator, the access network device needs to take at least two factors into consideration, namely, the resources actually occupied by the service and the preset resources occupied by the service of the operator, and then determines by using certain rules and policies. For example, if the difference between the resources actually occupied by the service and the preset resources occupied by the service is greater than a preset difference, specifically, when the difference between the resources actually occupied by the service and the preset resources occupied by the service is greater than the preset difference, or a ratio of the resources actually occupied by the service to the preset resources occupied by the service is greater than a preset ratio, it is necessary to perform the MLB for the user equipments served by the operator.

When the MLB is performed, a part of or all of the user equipments served by the operator are handed over to other cells.

In view of the above, in the embodiment of the present invention, the access network device may acquire the resources actually occupied by the service of the operator that is in the cell controlled by the base station and the preset resources occupied by the service of the operator, and determine, according to the acquired resources actually occupied by the service and preset resources occupied by the service, whether to perform the MLB for the user equipments served by the operator. Because in this embodiment, the user equipments in one cell are categorized by the operators, and the MLB is performed in consideration of the resources actually occupied by the service of the operator and the preset resources occupied by the service of the operator. As compared with determining, only according to the resources occupied by all the user equipments in the cell, whether to perform the MLB in the prior art, the method according to the embodiment of the present invention can balance the resources actually occupied by the service of the user equipments served by each operator.

In one specific embodiment, when executing the step 102, the access network device may determine, according to the ratio of the resources actually occupied by the service of the operator to the preset resources occupied by the service of the operator, whether to perform the MLB for the user equipments served by the operator. Specifically, when the ratio of a certain operator is greater than a preset threshold, it is determined to perform the MLB for the user equipments served by the operator.

It should be noted that, the steps 101 to 102 are used to determine whether to perform the MLB for the user equipments served by an operator. However, multiple operators are usually deployed in one cell, and whether to perform the MLB is determined in consideration of the relationship of corresponding ratios of the multiple operators in the cell. For example, when the ratio of a certain operator is greater than the preset threshold, and the ratio is the maximum in the corresponding ratios of the multiple operators, the access network device determines to perform the MLB for the user equipments served by the operator.

In another specific embodiment, as for one cell where multiple operators are deployed, that is, in the scenario of network sharing, the access network device, before performing the steps 101 to 102, needs to determine overall resources of the cell, and specifically, needs to determine whether the sum of the resources actually occupied by services of all the operators in the cell is greater than the preset resource value. If greater, steps 101 to 102 are performed, and otherwise, the step of the MLB does not need to be performed. The preset resource value may be a total resource value of the preset resources occupied by the service of all the operators in the cell. Hereinafter, one specific embodiment is used to illustrate the method according to the embodiment of the present invention, and the flow chart thereof is as shown in FIG. 2. The method includes the following steps:

Step 201: The access network device collects statistics of the resources actually occupied by a service of each operator in the current cell.

It can be understood that, in the scenario of multiple operators sharing a radio access network, in the embodiment of the present invention, user equipments in the cell are categorized on the basis of an operator.

As for a certain cell (hereinafter referred to the current cell), when performing the MLB, the access network device in the cell needs to firstly collect statistics of the resources actually occupied by the service of each operator in the current cell, specifically by collecting statistics of the radio air interface resources of all the user equipments served by each operator in the current cell, and taking the sum of the radio air interface resources of all the user equipments served by the operator as the resources actually occupied by the service of the corresponding operator.

Step 202: According to a ratio of the resources actually occupied by the service of the operator to the preset resources occupied by the service of the corresponding operator and a preset policy, the access network device determines the operator corresponding to the user equipments on which the MLB needs to be performed, where, the ratio is recorded as a weight value (Weight Value).

The preset policy herein may include: the MLB needs to be performed on the user equipments served by the operator with the Weight Value greater than a preset threshold a, the MLB does not need to be performed on the user equipments served by the operator with the Weight Value smaller than or equal to the preset threshold a, and under such circumstance, during the comparison between the ratio and the preset threshold, all the operators use the same threshold a for comparison.

The preset policy may also include: if the Weight Value of a certain operator i is greater than a preset threshold ai corresponding to the operator i, the MLB needs to be performed on the user equipments served by the operator; otherwise, the MLB does not need to be performed, and under such circumstance, during the comparison between the ratio and the preset threshold, the preset threshold used by each operator may be different.

The preset policy may also include: in each operator of the current cell, the MLB needs to be performed on the user equipments served by at least one operator with the maximum Weight Value being greater than the preset threshold, and the MLB does not need to be performed on the user equipments served by other operators.

The foregoing preset policy may further include other policies such as: the MLB needs to be performed on the user equipments served by the corresponding operator with the Weight Value being greater than a preset threshold b and the number of the user equipments being larger than a certain number. The preset threshold b herein may be smaller than the aforementioned preset threshold a, and the specific content of the preset policy is not limited to the aforementioned policy, and may be preset in the access network device according to specific user's demands.

Step 203: The access network device selects the user equipments served by the operator on which the MLB needs to be performed to perform load transfer on the user equipments.

If the access network device determines that the MLB state of a certain operator indicates that it is necessary to perform the MLB, the MLB procedure is started, and specifically, a part of or all of the user equipments served by the operator on which the MLB needs to be performed are handed over to other cells.

It should be noted that, after completing the performing of the MLB of the cell according to the steps 201 to 203, the access network device may also return to perform steps 201 to 203 immediately, or return to perform steps 201 to 203 after a period of time. That is, the access network device may periodically or non-periodically perform the MLB according to the steps in this embodiment.

In view of the above, in this embodiment, the access network device may collect statistics of the resources actually occupied by the service of each operator in the current cell, determine the corresponding operator according to the ratio of the resources actually occupied by the service of the operator to the preset resources occupied by the service of the corresponding operator and the preset policy, and perform the load transfer on the user equipments served by the operator on which the MLB needs to be performed. The preset policy may include that the MLB needs to be performed on the user equipments served by the operator with the ratio greater than the preset threshold. Because, in this embodiment, the user equipments in one cell are categorized by the operators, and the MLB is performed in consideration of the resources actually occupied by the service of the operator, and the preset resources occupied by the service of the operator, which can genuinely reflect the situation of resources occupied by the user equipments served by the operator in the cell. As compared with determining whether to perform the MLB only according to the resources occupied by all the user equipments in the cell in the prior art, the method according to the embodiment of the present invention can balance the resources actually occupied by the service of the user equipments served by each operator.

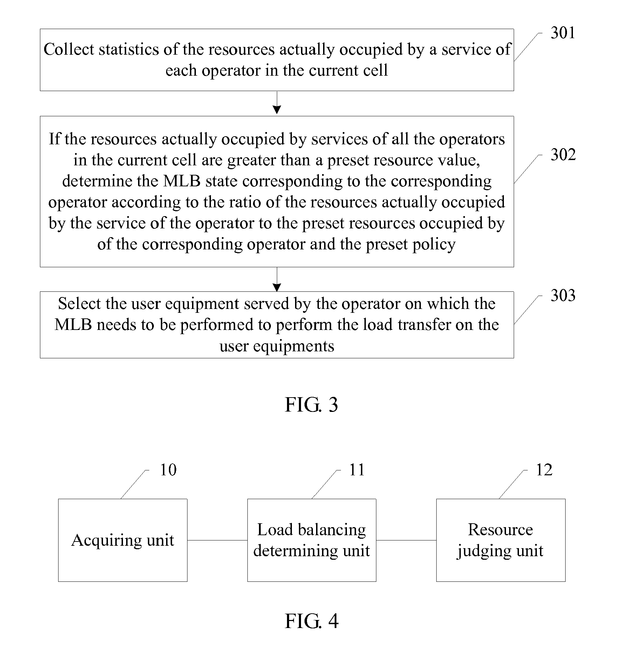

The embodiment of the present invention further provides another mobility load balancing method, mainly applied in the scenario of multiple operators sharing a network, such as sharing LTE, GSM, UMTS, or other networks. The method in this embodiment is a method executed by an access network device such as a base station, and the flow chart thereof is as shown in FIG. 3. The method includes the following steps.

Step 301: Collect statistics of the resources actually occupied by a service of each operator in the current cell.

It can be understood that, in the scenario of multiple operators sharing a radio access network, in the embodiment of the present invention, each user equipment in the cell is divided on the basis of an operator.

As for a specific cell (hereinafter referred to the current cell), when performing the MLB, the access network device in the cell needs to firstly collect statistics of the resources actually occupied by the service of each operator in the current cell, specifically by collecting statistics of the radio air interface resources of all the user equipments served by each operator in the current cell, and taking the sum of the radio air interface resources of all the user equipments served by the operator as the resources actually occupied by the service of the operator.

Step 302: If the resources actually occupied by services of all the operators in the current cell are greater than the preset resource value, determine the operator corresponding to the user equipment on which the MLB needs to be performed according to a ratio of the resources actually occupied by the service of the operator to the preset resources occupied by the service of the corresponding operator and a preset policy, in which, the ratio is recorded as a Weight Value.

In this embodiment, when the resources occupied by the actual service (that is, the overall service) of all the operators in the current cell are greater than the preset resource value, whether to perform the load balancing of the cell is determined, and otherwise, the load balancing procedure of the cell is not performed. The resources actually occupied by the overall service are specifically the sum of the resources actually occupied by the service of each operator calculated in step 301.

The preset policy herein includes: in each operator of the current cell, the MLB needs to be performed on the user equipments served by the operator with the maximum Weight Value, and the MLB does not need to be performed on the user equipments served by other operators; or in each operator of the current cell, the MLB is performed on the user equipments served by at least one operator with a maximum Weight Value being greater than the preset threshold, and the MLB does not need to be performed on the user equipments served by other operators.

The preset policy may also include: in each operator in the current cell, the MLB needs to be performed on the user equipments served by the operator with the Weight Value greater than a preset threshold a, the MLB does not need to be performed on the user equipments served by the operator with the Weight Value smaller than or equal to the preset threshold a, and under such circumstance, during the comparison between the ratio and the preset threshold, all the operators use the same threshold a for comparison.

The preset policy may also include: if the Weight Value of a certain operator i is greater than a preset threshold ai corresponding to the operator i, the MLB needs to be performed on the user equipments served by the operator; otherwise, the MLB does not need to be performed, and under such circumstance, during the comparison between the ratio and the preset threshold, the preset threshold used by each operator may be different.

The foregoing preset policy may further include other policies such as: the MLB needs to be performed on the user equipments served by the corresponding operator with the Weight Value being greater than a preset threshold b and the number of the user equipments being larger than a certain number. The preset threshold b herein may be smaller than the aforementioned preset threshold a, and the specific content of the preset policy is not limited to the aforementioned policy, and may be preset in the access network device according to specific user's demands.

Step 303: Select the user equipments served by the operator on which the MLB needs to be performed to perform the load transfer on the user equipments.

After the access network device determines the operator on which the MLB needs to be performed through step 302, the MLB procedure is started, and specifically, a part of or all of the user equipments served by the operator on which the MLB needs to be performed are handed over to other cells.

It should be noted that, after completing the performing of the cell load balancing according to the steps 301 to 303, the access network device may also return to perform steps 301 to 303 immediately, or return to perform steps 301 to 303 after a period of time. That is, the access network device may periodically or non-periodically perform the load balancing according to the steps in this embodiment.

In view of the above, because, in this embodiment, the user equipments in one cell are categorized by the operators, and the access network device performs load balancing in consideration of the resources actually occupied by the service of multiple operators and the resources actually occupied by the service and the preset resources occupied by the service of each operator, so that the MLB state determined by each operator can genuinely reflect the situation of resources occupied by the user equipments served by the operator in the cell. As compared with determining whether to perform the MLB only according to the resources occupied by all the user equipments in the cell in the prior art, the method according to the embodiment of the present invention can balance the resources actually occupied by the service of the user equipments served by each operator.

It can be understood that, in the embodiments corresponding to the foregoing FIG. 2 and FIG. 3, the operator on which the MLB is performed is determined according to the ratio of the resources actually occupied by the service of the operator to the preset resources occupied by the service and the preset policy. In other embodiments, the operator on which the MLB is performed may be determined according to the difference between the resources actually occupied by the service of the operator and the preset resources occupied by the service and another preset policy. Specifically, the other preset policy may include: when the difference is greater than a preset threshold difference a, the MLB needs to be performed on the user equipments served by the operator; or, the difference is greater than the preset threshold difference a and the user equipments served is greater than the preset value, the MLB needs to be performed on the user equipments served by the operator; or the MLB is performed on the user equipments served by at least one operator with the maximum difference.

The embodiment of the present invention further provides an access network device, such as a base station, and the structural diagram is as shown in FIG. 4. The access network device includes:
an acquiring unit 10, configured to acquire resources actually occupied by a service of an operator and preset resources occupied by the service of the operator, where the operator is in a cell controlled by a base station; and
a load balancing determining unit 11, configured to determine whether to perform MLB for a user equipments served by the operator according to the resources actually occupied by the service and preset resources occupied by the service acquired by the acquiring unit 10.

Specifically, the acquiring unit 10 is specifically configured to acquire air interface resources of all the user equipments served by the operator, and take a sum of the air interface resources of all the user equipments served by the operator as the resources actually occupied by the service of the corresponding operator.

Specifically, the load balancing determining unit 11 may determine whether to perform the MLB for the operator according to the difference between the resources actually occupied by the service and the preset resources occupied by the service of the operator. For example, when the difference is greater than the preset difference, it is determined that the MLB needs to be performed. Specifically, when the difference between the resources actually occupied by the service and the preset resources occupied by the service is greater than the preset difference, or the ratio of the resources actually occupied by the service to the preset resources occupied by the service is greater than the preset threshold, the load balancing determining unit 11 determines to perform the MLB for the user equipments served by the operator.

When determining to perform the MLB for the user equipments served by multiple operators in one cell, the load balancing determining unit 11 should take the following into consideration: the resources actually occupied by the service and the preset resources occupied by the service of each operator and the relationship of the ratios of different operators. For example, when the ratio of a certain operator is greater than the preset threshold, and the ratio is the maximum in the corresponding ratios of the multiple operators, the access network device determines to perform the MLB for the user equipments served by the operator.

In the access network device according to the embodiment of the present invention, the acquiring unit 10 acquires the resources actually occupied by the service of the operator and the preset resources occupied by the service of the operator in the cell controlled by the base station, and the load balancing determining unit 11 determines whether to perform the MLB for the user equipments served by the operator according to the acquired resources actually occupied by the service and preset resources occupied by the service. Because, in this embodiment, the user equipments in one cell are categorized by the operators, and when performing the MLB, the load balancing determining unit 11 takes into consideration the resources actually occupied by the service of the operator and the preset resources occupied by the service of the operator. As compared with determining whether to perform the MLB only according to the resources occupied by all the user equipments in the cell in the prior art, the method according to the embodiment of the present invention can balance the resources actually occupied by the service of the user equipments served by each operator.

In one specific embodiment, in addition to the acquiring unit 10 and the load balancing determining unit 11, the access network device may further include: a resource judging unit 12, when there are multiple operators in the cell, configured to determine whether the sum of the resources actually occupied by services of all the operators in the cell is greater than a preset resource value. If greater, the load balancing determining unit 11 is instructed to determine whether to perform the MLB; and otherwise, the load balancing determining unit 11 will not determine whether to perform the MLB.

In this embodiment, the load balancing determining unit 11, the resource judging unit 12, and the acquiring unit 10 can all be integrated on a processor. Moreover, the load balancing can be performed on the user equipments served by the multiple operators in the cell, when the resource judging unit 12 determines that the sum of the resources actually occupied by services of all the operators in the cell is greater than the preset resource value, the load balancing determining unit 11 determines whether to perform the MLB in consideration of the resources actually occupied by the service and preset resources occupied by the service of each operator. As compared with determining whether to perform the load balancing only according to the resources occupied by all the user equipments in the cell in the prior art, the method according to the embodiment of the present invention can balance the resources actually occupied by the service of user equipments served by each operator.

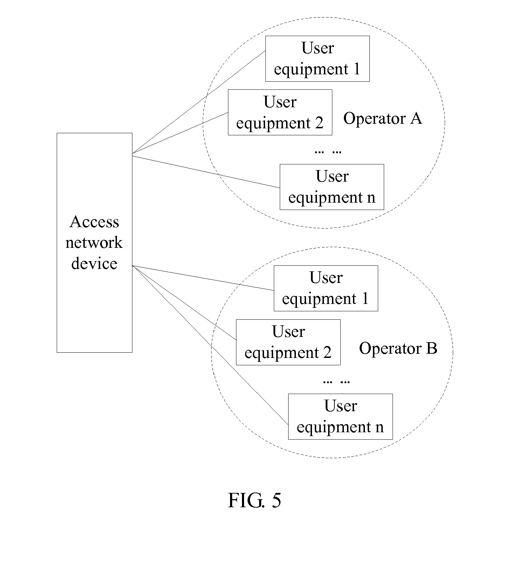

It should be noted that, the foregoing MLB method may be applied in the MLB system shown in FIG. 5. The system may include the access network device and the user equipments corresponding to at least two operators (Operators A and B are taken as examples for illustration in FIG. 5), and the structure of the access network device may be as shown in FIG. 4. Moreover, the MLB may be performed between all the units in the access network device according to the method shown in FIG. 1 to FIG. 3, which is not repeated in detail herein.

Persons of ordinary skill in the art may understand that all or part of the steps of the methods in the foregoing embodiments may be implemented by a computer program instructing relevant hardware. The program may be stored in a computer readable storage medium. The storage medium may include a ROM, a RAM, a magnetic disk, or an optical disc.

In the foregoing description, the mobility load balancing method and the access network device according to the embodiments of the present invention are illustrated in detail. A specific example is applied herein to illustrate the principle and implementation of the present invention, and the abovementioned embodiments are merely used to help understanding the method of the present invention and the core idea thereof. Meanwhile, those persons of ordinary skill in the art may, according to the idea of the present invention, make some alternation on the specific implementation and application scope. Based on the above, the content of this specification should not be understood as a limitation to the present invention.

## Claims

1. A mobility load balancing method, comprising:
acquiring resources actually occupied by a service of an operator and preset resources occupied by the service of the operator, wherein the operator is in a cell controlled by a base station; and
determining, according to the resources actually occupied by the service and the preset resources occupied by the service, whether to perform mobility load balancing MLB for a user equipment served by the operator.

2. The method according to claim 1, before the determining, according to the resources actually occupied by the service and the preset resources occupied by the service, whether to perform the MLB for a user equipment served by the operator, further comprising:
when the operator comprises multiple operators in the cell, determining that a sum of the resources actually occupied by services of all the operators in the cell is greater than a preset resource value.

3. The method according to claim 1 or 2, wherein the determining, according to the resources actually occupied by the service and the preset resources occupied by the service, whether to perform the MLB for a user equipment served by the operator comprises:
determining, according to a ratio of the resources actually occupied by the service of the operator to the preset resources occupied by the service of the operator, whether to perform the MLB for the user equipment served by the operator.

4. The method according to claim 3, wherein the determining, according to a ratio of the resources actually occupied by the service of the operator to the preset resources occupied by the service of the operator, whether to perform the MLB for the user equipment served by the operator comprises:
when the ratio is greater than a preset threshold, determining to perform the MLB for the user equipment served by the operator; or
when the ratio is greater than a preset threshold, and the ratio is the maximum in ratios corresponding to the multiple operators, determining to perform the MLB for the user equipment served by the operator.

5. The method according to any one of claims 1-4, wherein the acquiring resources actually occupied by a service of an operator, wherein the operator is in a cell controlled by a base station comprises:
taking a sum of radio air interface resources of all the user equipments served by the operator in the cell as the resources actually occupied by the service of the operator.

6. An access network device, comprising:
an acquiring unit, configured to acquire resources actually occupied by a service of an operator and preset resources occupied by the service of the operator, wherein the operator is in a cell controlled by a base station; and
a load balancing determining unit, configured to determine, according to the resources actually occupied by the service and the preset resources occupied by the service acquired by the acquiring unit, whether to perform mobility load balancing MLB for a user equipment served by the operator.

7. The access network device according to claim 6, further comprising:
a resource judging unit, configured to determine, when the operator comprises multiple operators in the cell, whether a sum of the resources actually occupied by services of all the operators in the cell is greater than a preset resource value, and if greater, the load balancing determining unit determines, according to the resources actually occupied by the service and the preset resources occupied by the service acquired by the acquiring unit, whether to perform the MLB for the user equipment served by the operator.

8. The access network device according to claim 6 or 7, wherein
the load balancing determining unit is further configured to determine, according to a ratio of the resources actually occupied by the service of the operator to the preset resources occupied by the service of the operator, whether to perform the MLB for the user equipment served by the operator.

9. The access network device according to claim 8, wherein
the load balancing determining unit is specifically configured to determine, when the ratio is greater than a preset threshold, to perform the MLB for the user equipment served by the operator; or
when the ratio is greater than a preset threshold, and the ratio is the maximum in ratios corresponding to the multiple operators, determine to perform the MLB for the user equipment served by the operator.

10. The access network device according to any one of claims 6-9, wherein
the acquiring unit is configured to take a sum of radio air interface resources of all the user equipments served by the operator in the cell as the resources actually occupied by the service of the operator.
